# EUROPEAN PATENT APPLICATION

(11) **EP 1 128 704 A1**
(43) Date of publication of application: **29.08.2001**
(21) Application number: 01301203.4
(22) Date of filing: 12.02.2001
(51) Int. Cl.: H04Q 11/04, H04Q 7/30

(54) **System and method for enhancing downlink traffic capacity for a soft hand-off**

(30) Priority: 22.02.2000 US 510171
(71) Applicant: LUCENT TECHNOLOGIES INC., Murray Hill, New Jersey 07974-0636 (US)
(72) Inventor: Baldwin, John Henry, Morristown, NJ 07960 (US); Monin, Jeffrey, North Caldwell, NJ 07006 (US); Park, Se-Yong, Randolph, NJ 07869 (US); Sriram, Kotikalapudi, Marlboro, NJ 07746 (US)
(74) Representative: Buckley, Christopher Simon Thirsk

(57) **Abstract**

A system and method for enhancing inter-site traffic capacity for a soft hand-off reduces the requisite communications capacity on a forward path between the mobile switching center and the base station controller. A base station controller receives an original data packet for a forward path transmission to a mobile station over the forward path between the mobile switching center and the base station controller. The base station controller copies the original data packets to generate distributional data packets if the mobile station is in a soft hand-off. The distributional data packets are sent to corresponding base stations participating in the soft hand-off.

## Description

### FIELD OF INVENTION

This invention relates generally to wireless communication systems and more particularly toward a system and method for enhancing inter-site forward traffic capacity for a soft hand-off.

### BACKGROUND

A spread-spectrum system, such as a code-division multiple access (CDMA) system, typically supports a soft hand-off. During a soft hand-off of the mobile station from one coverage area (e.g., sector) to another, multiple versions of similar signals may be transmitted between the mobile switching center on both the reverse path and the forward path. In the context of the forward signal path, the mobile switching center may authorize base stations to simulcast forward voice and control channels over co-frequency carriers. The mobile switching center transmits the duplicative forward channels to the base station controller associated with multiple base stations participating in the soft handoff. The multiple base stations, which serve the geographic location of the mobile station, may transmit identical information on forward channels of the air interface to the mobile station. At the mobile station, the rake receiver combines the simulcasted forward channels to realize diversity gain, where possible.

The base station controller and the mobile switching center are interconnected by communications links or lines, such as E1's or T1's. In practice, for a wireless communication system with a few hundred thousand subscribers, the communication lines between the mobile switching center and the base station controller may require one or more E3 capacity links or T3 capacity links to meet anticipated maximum traffic load requirements; particularly, where many subscribers are engaged in a soft hand-off at the same time. The communications links or lines may extend over long distances because the mobile switching center and the base station controller may be located at different sites that are separated by many kilometers, for example.

In some cases, the service provider may require considerable expenditures for leasing, installing, purchasing, and maintaining communications lines, high-capacity microwave equipment, or fiber optic equipment to provide adequate communications capacity between the mobile switching center and the base station controller. In other cases, the service provider may not have sufficient interconnect capacity between base station controller and the mobile switching center to handle duplicate voice channels for the soft hand-off, so calls may be blocked, leading to lost revenue and potentially the loss of customers.

Thus, a need exists for enhancing the efficiency of inter-site communications between a base station controller and the mobile switching center in a wireless system to reduce expenditures for communications lines and to provide reliable service to subscribers.

### SUMMARY OF THE INVENTION

In accordance with the invention, the system and method for enhancing inter-site traffic capacity for a soft hand-off reduces the requisite communications capacity on a forward path between the mobile switching center and the base station controller. A base station controller receives an original data packet for a forward path transmission to a mobile station over the forward path between the mobile switching center and the base station controller. The base station controller copies the original data packets to generate distributional data packets if the mobile station is in a soft hand-off. The distributional data packets are sent to corresponding base stations participating in the soft hand-off.

### BRIEF DESCRIPTION OF THE DRAWINGS

In the specification and the following drawings, like reference numbers shall indicate like elements.

FIG. 1 is a block diagram of a wireless communications network in accordance with the invention.

FIG. 2 is a block diagram of a base station controller of FIG. 1.

FIG. 3 is a block diagram illustrating a forward signal path through the wireless network of FIG. 1 to support a soft hand-off.

FIG. 4 is a flow chart of a method for facilitating reduction of a requisite forward path capacity of the wireless communications network during a soft hand-off in accordance with the invention.

FIG.5A is a block diagram of a wireless communication network using a first multicasting scheme in accordance with the invention.

FIG. 5B is a chart illustrating the possible contents of a multicasting database for the first multicasting scheme of FIG. 5A.

FIGs. 5C1- FIG. 5C3 are charts illustrating possible conversion data in the base stations for the first multicasting scheme of FIG. 5A.

FIG.6A is a block diagram of a wireless communication network using a second multicasting scheme in accordance with the invention.

FIG. 6B is a chart showing possible contents of a multicasting database for the second multicasting scheme of FIG. 6A.

FIG.7A is a block diagram of a wireless communication network using a third multicasting scheme in accordance with the invention.

FIG. 7B is a chart showing possible contents of a multicasting database for the third multicasting scheme of FIG. 7A.

FIG. 8 is a flow chart of a method for multicasting data packets for downstream soft hand-off traffic in accordance with the invention.

FIG. 9 is a block diagram of key components of the mobile switching center for supporting data packet communications of the invention.

FIG. 10 illustrates a data structure for data packets that may be used to practice the invention.

FIG. 11 illustrates a start field an asynchronous transfer mode cell in accordance with FIG. 10.

FIG. 12 illustrates the contents of an AAL2 header in accordance with FIG. 10.

### DETAILED DESCRIPTION

As used herein a traffic packet includes a voice packet or a data packet. A data packet refers to a packet with any informational content and data structure format, including a voice packet, a signaling packet, a control data packet, an internet protocol (IP) packet, an asynchronous transfer mode (ATM) packet, an adaptive layer type 2 (AAL2) packet, and adaptive layer type 5 (AAL5) packet, a mini-packet, or the like.

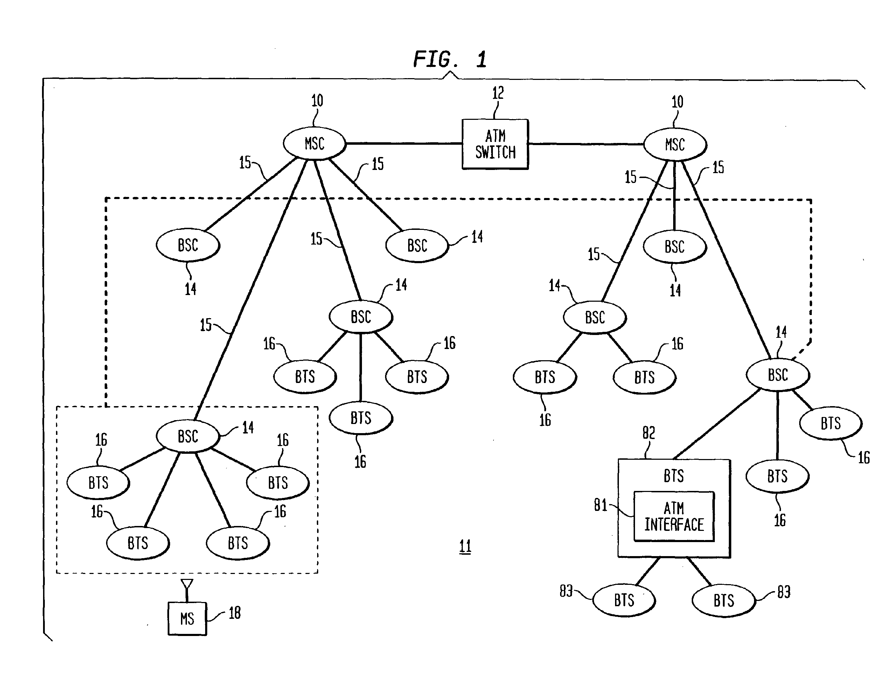

In accordance with the invention, FIG. 1 shows a block diagram of a wireless network 11. The wireless network 11 includes at least one mobile switching center (MSC) 10 that communicates with base station controllers (BSC) 14 over communication lines 15. The base station controllers 14 and the mobile switching centers 10 may be located at different sites, which may be separated by various distances (e.g., 25 Km). The base station controllers 14 communicate with one or more base stations (BTS) 16. Each group of base stations 16 and its corresponding base station controller 14 may be referred to as a base station subsystem 20.

As illustrated in FIG. 1 two or more mobile switching centers 10 may communicate to one another via an ATM switch 12 or via an ATM network. The mobile switching center 10 is capable of handling data packets for transmission and reception between the mobile switching center 10 and the base station controller 14. The communication line 15 refers to any type of point-to-point or point-to-multipoint communications infrastructure including a fiber optic link, an optical link, a microwave link, wireline equipment, pulse code modulation (PCM) equipment, a T1 link, an E1 link, a DS3 link, an STM-1 link, or otherwise. The communications line 15 has a maximum capacity which may be rated in terms of (Mbps) megabits per second, for example.

The wireless network 11 may feature base stations with daisy-chaining capability, without daisy-chaining capability, or both. A daisy-chaining capable base station 82 is one which includes an ATM interface 81 that routes soft hand-off data packets to one or more downstream base stations 83 at neighboring cell sites. The ATM interface 81 detects the soft hand-off packet and copies the packet to send it to the designated channel element of the downstream base stations 83. The non-daisy-chaining capable base station 16 relies upon the base station controller 14 with an integral or adjunct packet switching unit to be a distribution node for data packets.

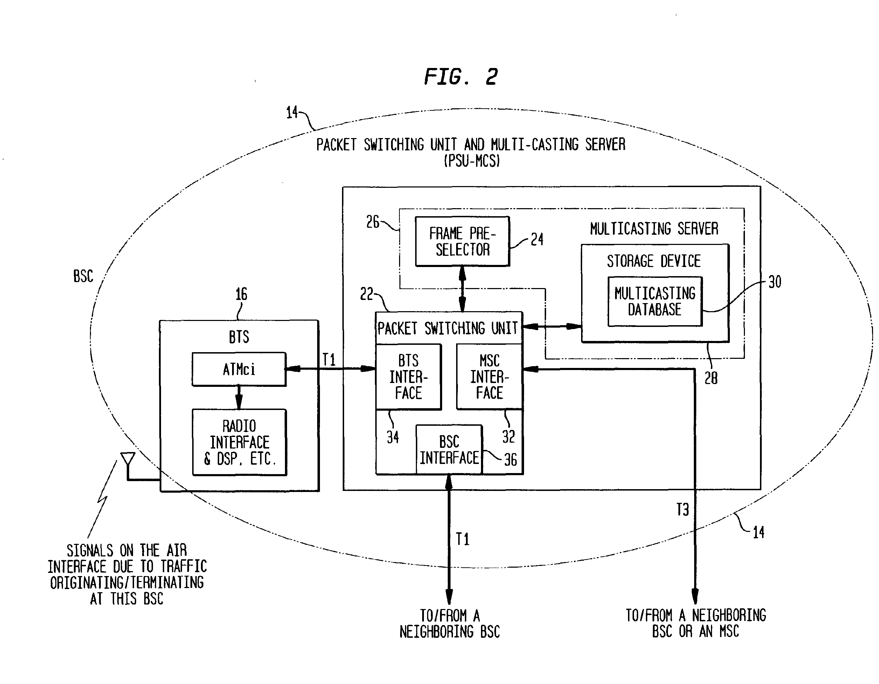

FIG. 2 is a block diagram that shows a base station controller 14 in more detail than FIG. 1. A base station controller 14 preferably includes a packet switching unit 22 coupled to a multi-casting server 26. Although the base station controller 14 may contain an integral base station 16 as shown, the base station 16 may be located remotely from the base station controller 14 and still fall within the scope of the invention.

The packet switching unit 22 provides a first interface 32 to a mobile switching center 10 and a second interface 34 for one or more base stations 16 associated with the base station controller 14. The base station controller 14 controls channel assignment activity and other functions for its associated base stations 16. The packet switching unit 22 may provide a third interface 36 to one or more neighboring base station controllers 14 that neighbor the base station controller 14.

The multicasting server 26 includes a storage device 28 and a frame preselector 24. The storage device 28 stores a multicasting database 30 for forward path management between the mobile switching center 10 and the base station controller 14 and between the base station controller 14 and the one or more base stations 16. The frame preselector 24 is only used for processing data packets on the reverse path between the base station 16 and the mobile switching center 10.

The multicasting database 30 preferably comprises a multicasting table organized by different active soft hand-offs. The multicasting database 30 may contain the following fields for each active soft hand-off: virtual path identifier (VPI), virtual channel identifier (VCI), and channel identifier (CID). A virtual path indicator refers to a transmission path through a packet network. A virtual channel identifier refers to an address of a channel group of voice channels, data channels, or signaling channels of a particular base station 16. The channel identifier refers to a particular air interface channel within the channel group for a mobile station 18.

A complete address for a data packet includes a virtual channel identifier, a virtual path identifier, and a channel identifier. The complete address may be stored in an ATM cell header, for example, to facilitate proper routing of data packets between the mobile switching center 10, the base station controller 14, and any base stations 16 participating in the soft hand-off. Groups of CID's and VCI, without the VPI may be sufficient to appropriately route data packets for soft hand-offs in wireless infrastructure networks without alternative path choices or without routing ambiguity between different packet switching units 22.

The BSC 14 preferably maintains a multicasting table for mapping incoming VPI, VCI, and CID combinations to outgoing VPI, VCI and CID combinations. The BSC 14 has a map entry of incoming/outgoing combinations for each of the legs in the soft handoff. The multi-casting server 26 may maintain and update information about virtual channel identifiers (VCI's) and virtual path identifiers (VPI's) for links going to neighboring BSC's 14 at neighboring sites from the BSC 14 in a neighbor-attributes table.

From the BTS 16 to the MSC 10, a virtual channel connection (VCC) has two distinct links to a virtual connection: (1) a first link between the BSC 14 and MSC 10 and (2) a second link between BSC 14 and the BTS 16. The virtual circuit identifier can be selected independently for the first link and the second link on a link-by-link basis by the BSC 14. Accordingly, more alternate routes may be available when the first link is independent from the second link. The multicasting table keeps an input/output map which maps corresponding virtual channel identifiers between the first link and the second link. In practice, CID's may be carried through the BSC 14 and are the same for the BSC-MSC link and the BTS-BSC link.

For a soft hand-off where daisy chaining between base stations is used, as few as one virtual path may be used with a single VPI. For a soft hand-off where no daisy-chaining is used for communication between base stations, the base station controller sets up separate virtual paths to each cell site involved in a soft hand-off. Accordingly, each leg of the soft hand-off may feature a separate corresponding VPI.

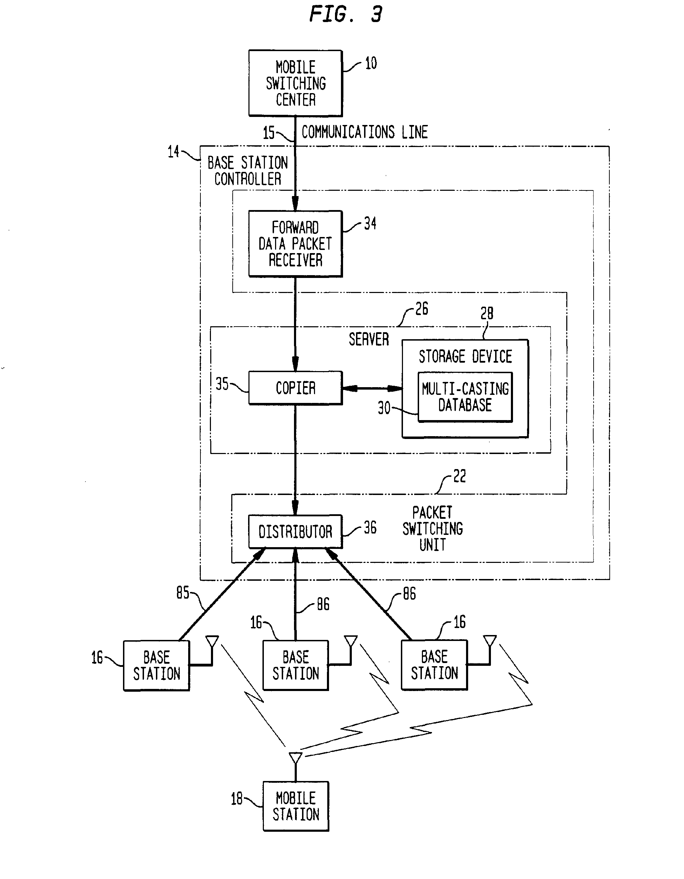

FIG. 3 illustrates the system for reducing requisite traffic capacity on a forward component of the communication line 15 between the mobile switching center 10 and the base station controller 14. The base station controller 14 includes a forward data packet receiver 34 coupled to a copier 35. In turn, the copier 35 is coupled to a distributor 36. The distributor 36 communicates with multiple base stations 16 participating in a soft hand-off. The forward data packet receiver 34 and the distributor 36 are components of the packet switching unit 22. The copier 35 and a storage device 28, including the multicasting database 30, are components of the multicasting server 26.

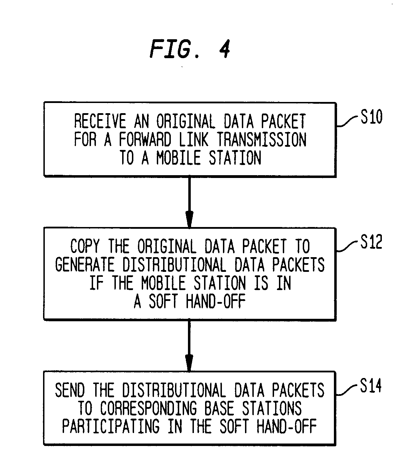

FIG. 4 is a flow chart of the method for facilitating reduction of the requisite forward path capacity, and will be described in conjunction with the system of FIG. 3. Initially, in step S10 a forward data packet receiver 34 receives an original data packet for a forward link transmission to a mobile station 18. In the forward path over communications line 15 between the MSC 10 and the BSC 14, a single copy is transmitted for reception at the base station controller 14 to minimize the requisite traffic capacity for soft hand-offs. One leg of a soft hand-off may be designated a primary leg 85, whereas the other legs participating in the soft hand-off may be referred to as secondary legs 86 (FIG. 3). The MSC 10 preferably sends a single copy for the primary leg 85 with the primary CID and VCI for a soft hand-off to conserve transmission resources.

Thereafter in step S12, a copier 35 copies the original data packet to generate distributional data packets if the mobile station 18 is in a soft hand-off. The BSC 14 looks at the multi-casting database 30 to determine the appropriate number of copies required for the appropriate soft hand-off legs. The multi-casting server 26 makes copies to send to each active base station 16 participating in the soft hand-off. The multicasting server 26 references the multicasting database 30 to determine the identity of the CID's and VCI's for the secondary legs 86 based on the identity of the CID and VCI received for primary leg 85.

The BSC 14 makes copies of the original data packet with different or identical CID's corresponding to vocoders at different base stations 16. The CID's are targeted for different vocoders in different base stations 16. For example, each CID may identify a particular channel element in a vocoder or a multi-channel card of a base station 16. The base station controller 14 or the mobile switching center 10 can assign any available CID designator of the base station 16 for the forward path. Thus, in practice, the actual CID value may be the same or different as other legs participating in the soft hand-off.

Finally, in step S14, a distributor 36 sends the distributional data packets to corresponding base stations 16 participating in the soft hand-off. The base stations 16 simulcast duplicative information over the air interface based on the distributional data packets. The mobile station 18 preferably receives the duplicative information to achieve diversity gain for the soft hand-off.

Three examples of distinct alternative schemes, which may be used for downstream multicasting of data packets, will now be described. In accordance with a first scheme illustrated in FIG. 5A through FIG. 5C, the MSC 10 supports one virtual channel connection (VCC) from the MSC 10 to each BTS of the legs 16 associated with all legs 71 of the soft hand-off via the BSC 14. The VCC represents a point-to-multipoint virtual connection for the simultaneous forward transmission of data packets. A virtual communications line 75 may, but need not, include an ATM switch or intermediate distribution node 72. Each data packet coming from the MSC 10 is looked at by the BSC 14 and a soft hand-off CID is placed within the data packet.

The BSC 14 invokes the multi-casting function in response to the detected receipt of an original data packet from the MSC 10. A single copy of the original data packet (destined for multiple soft handoff legs) from the mobile switching center 10 is sent to the BSC 14 on the VCC to the BSC 14. The BSC 14 makes multiple copies of the original data packet and sends a copy to each BTS 16 involved in the soft handoff using the mapping listed in the multicasting database 30. The BSC 14 preferably includes ATM/AAL2 switching built-in to the BSC 14. The base stations 16 participating in the soft hand-off simultaneously transmit the data packets to a mobile station located in a hand-off region 211. As shown each base station 16 has a hexagonal coverage area 213 for illustrative purposes; actual coverage areas of the base stations 16 may have virtually any shape and each coverage area may be different from others.

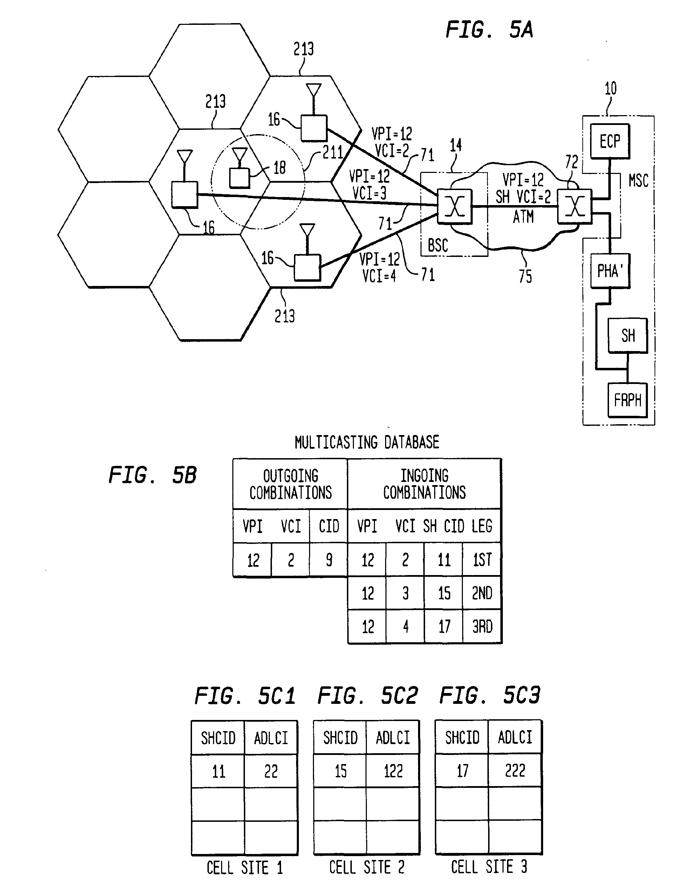

FIG. 5B shows an example of a multicasting table for storage in the multicasting database 30. The multicasting table of FIG. 5B may be used to route the data packets appropriately for a soft hand-off in accordance with the first multicasting scheme of FIG. 5A. The multicasting table of FIG. 5B includes incoming combinations that refer to the incoming values of VPI and VCI on the link between the MSC 10 and BSC 14. The multicasting table includes outgoing combinations that refer to the outgoing values, of the VPI and VCI on the three legs, participating in the soft hand-off, from the BSC 14 to a BTS 16. Advantageously, the incoming values and the outgoing values of VPI and VCI are identical for the MSC-BSC link and a primary leg of the soft-handoff to reduce processing at the BSC 14 at least for the primary leg. For example, as shown the MSC-BSC link and the primary leg have a VPI of two and a VCI of two, although other numbers, symbols or codes could be used to represent VPI and VCI values. Further, the outgoing combinations include a SH CID for the BTS 16 such that the BTS 16 can use the SH CID to identify the appropriate actual channel element, indicated by an actual call address, such as an actual DLCI (an actual digital logical channel indicator) stored within the base station 16. The actual DLCI may represent a channel element that was servicing a mobile station before a soft hand-off was initiated.

FIG. 5C1 through FIG. 5C3 are examples of charts of translation tables present at each base station 16 participating in the soft hand-off of FIG. 5A. The translation tables allow the base station 16 to identify the proper channel element indicated by the actual DLCI from reading the soft hand-off CID in the received, copied data packet.

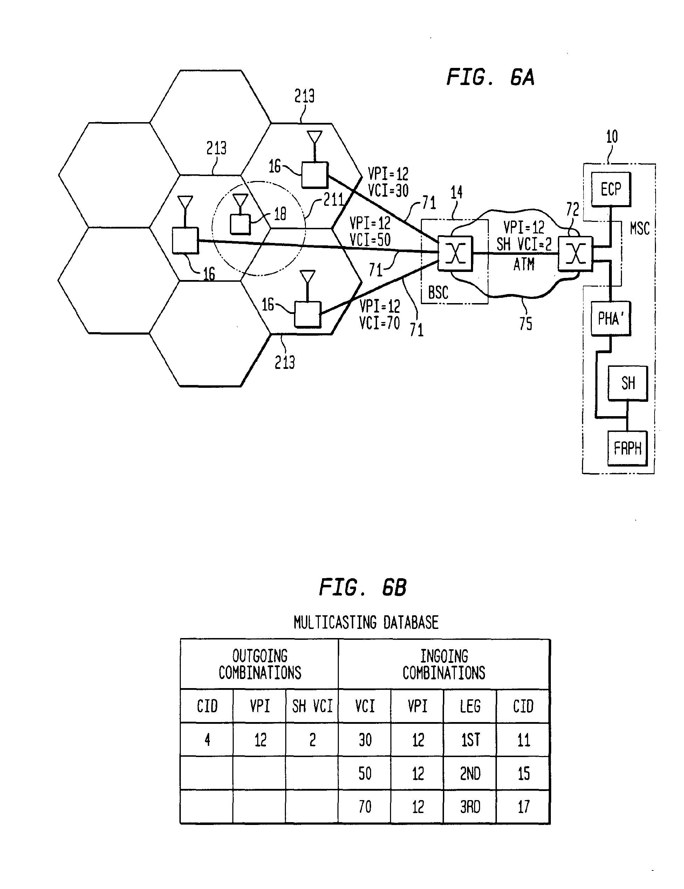

In accordance with a second multicasting scheme, FIG. 6A illustrates that the MSC 10 supports one or more VCC's from the MSC 10 to BSC 14 and a separate independent VCC for each leg 71 from BSC 14 to BTS 16. The BSC 14 looks at each original data packet (e.g., AAL2 packet) coming from the MSC 10. The BSC 14 invokes the multicasting function to copy the original data packet and route the copies to appropriate base stations 16 participating in the a soft hand-off.

The MSC 10 sends a single original copy of the soft handoff packet (destined for multiple soft hand-off legs) to the BSC 14 on one of the VCC's to the BSC 14. The BSC 14 makes multiple copies and sends to each BTS 16 involved in the soft handoff using the mapping listed in the multicasting table. ATM/AAL2 switching is preferably built in to the BSC 14.

FIG. 6B shows an example of a multicasting table that may be used to route the data packets appropriately for a soft hand-off in accordance with the second multicasting scheme of FIG. 6A. Like reference numbers in FIG. 5A and FIG. 6A indicate like elements.

A multicasting table is maintained for mapping incoming VPINCI and CID combinations to outgoing VPINCI and CID combinations. The multicasting table contains a map entry for incoming/outgoing combinations for each of the legs in a soft handoff.

The incoming combinations refer to the incoming values of VPI and VCI on the link between the MSC 10 and BSC 14. The outgoing combinations refer to the outgoing values, of the VPI and VCI on the three legs 71, participating in the soft hand-off, from the BSC 14 to a BTS 16. The incoming values and the outgoing values of VPI may be identical. However, the incoming and outgoing values of VCI are different because of the independent VCC's between the MSC-BSC link and the BSC-BTS links.

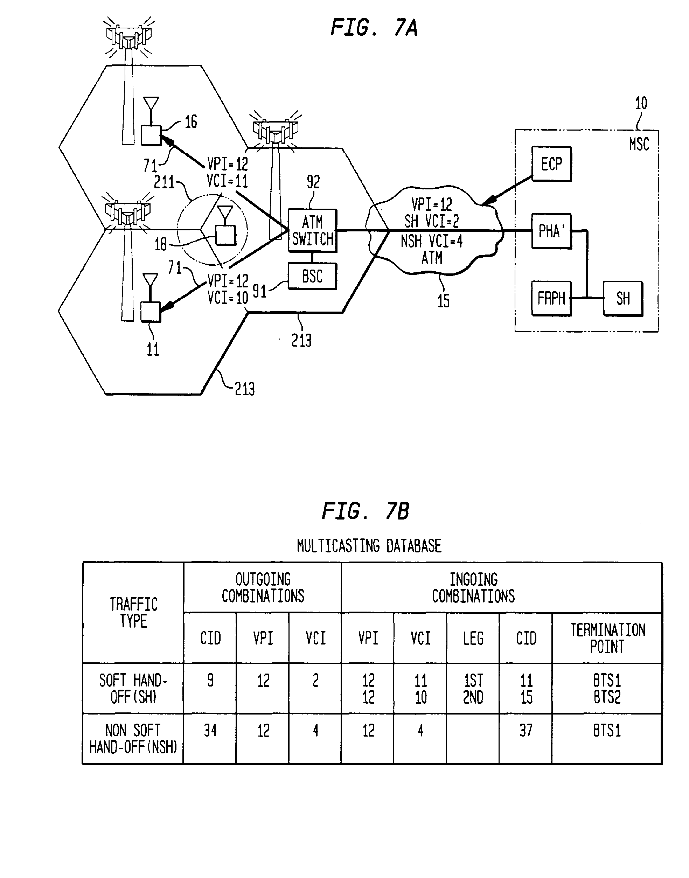

In accordance with a third multicasting scheme illustrated in FIG. 7A, an ATM switch 92 may be a separate, stand-alone version from a BSC 91 to facilitate reduced complexity of processing data packets at the site of the BSC 91. The BSC 91 contains a multicasting server, a multicasting database, and an interface for controlling the ATM switch 92. The MSC 10 supports one direct VCC from the MSC 10 to the BTS 16 for non-soft hand-off connections and a separate VCC from the site of the BSC 91 to the BTS 16 for the legs 71 of at least one soft handoff connection. The BSC 91 only processes the data packets (e.g., AAL2 packets) that are involved in the soft hand-off. Thus, less implementation complexity is required at the BSC 91.

On the forward path the base station controller 91 or the co-located ATM switch 92 assigns a unique VCI for the soft hand-off traffic of each base station 16. In comparison, the mobile switching center 10 may assign another VCI for non-soft hand-off traffic at each base station 16. A stream of ATM cells for different base station 16 has different VCI's. Many voice calls carried over a single base station 16 can share the same VCI. A channel identifier identifies the different voice calls for different mobile stations 18, although the voice calls may be transmitted from the same base station 16.

FIG. 7B shows an example of a multicasting table that may be used to route the data packets appropriately for a soft hand-off in accordance with the third multicasting scheme of FIG. 7A. The multicasting table of FIG. 7B includes incoming combinations that refer to the incoming values of VPI and VCI on the link between the MSC 10 and BSC 91. The multicasting table includes outgoing combinations that refer to the outgoing values, of the VPI and VCI on the two legs 71, participating in the soft hand-off, from the site of the BSC 91 to a BTS 16. The incoming values and the outgoing values of VPI are identical for the soft hand-off traffic and the non soft hand-off traffic. However, the incoming and outgoing values of VCI are different for the soft hand-off traffic than the non soft hand-off traffic because of the independent VCC's between the MSC-BSC link and the BSC-BTS links. The incoming and outgoing values of VCI are the same for the non soft hand-off traffic to each BTS 16.

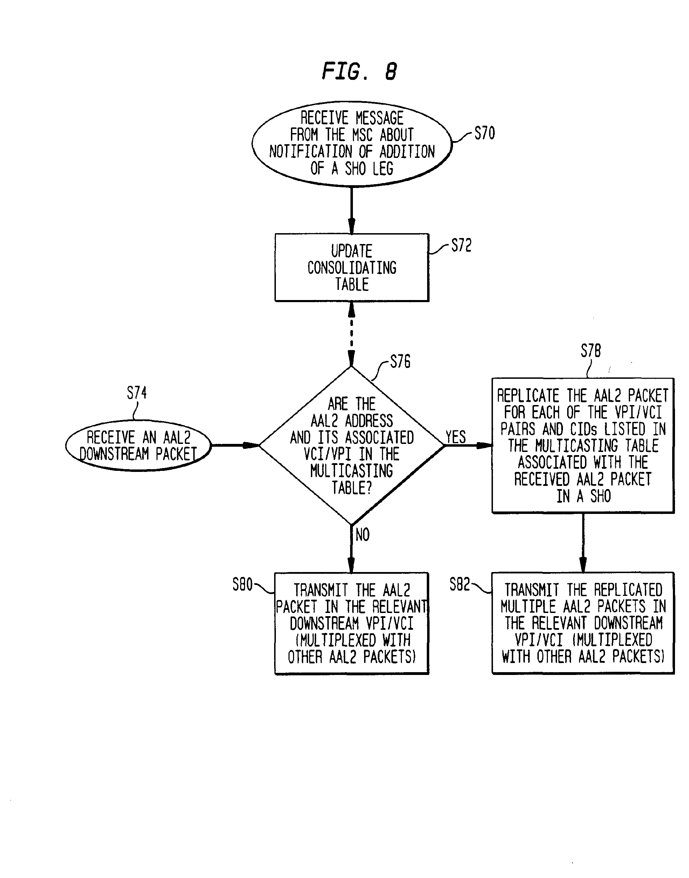

FIG. 8 is a flow chart for a method of multicasting data packets for downstream soft hand-off traffic at a base station controller 14. During soft hand-offs in the wireless system, the mobile switching center 10 determines when a soft hand-off is appropriate for a particular mobile station 18. Initially in step S70, the base station controller 14 receives a message from the MSC 10 about notification of an addition of a soft hand-off leg upon entry into a soft hand-off mode for a particular mobile station 18. In step S72, the base station controller 14 updates the multicasting database 30 consistent with the addition of one or more soft hand-off legs. Steps S70 and S72 occur independently of the other steps in FIG. 8. The dashed line between S72 and S76 represents communications associated with accessing the multicasting table.

The base station controller 14 receives a data packet (e.g., an AAL2 downstream packet) from the mobile switching center 10 in step S74.

In step S76, the base station controller 14 determines whether or not the data packet address (e.g., AAL2 address) and its associated VCINPI are present in the multicasting table. If the data packet address and the VCINPI data are present, the method continues to step S78. However, if the data packet address or the VCINPI address are not present, the method continues with step S80. In step S78, the base station controller 14 replicates the data packet (e.g., AAL2 packet) for each of the VPINCI pairs and CID's listed in the multicasting table associated with the received AAL2 packet in a soft hand-off. Following step S78 in step S82, the base station controller 14 transmits the replicated multiple data packets in the relevant downstream VPINCI. The transmission of the replicated multiple data packets (e.g., AAL2 packets) may include multiplexing the replicated data packets with other data packets for transmission as an ATM packet, for example.

In step S80, which may follow step S76, the base station controller 14 transmits a data packet (e.g., AAL2 packet) in the relevant downstream VPINCI. The transmission of the data packet may include multiplexing the replicated data packets with other data packets for transmission as an ATM packet, for example.

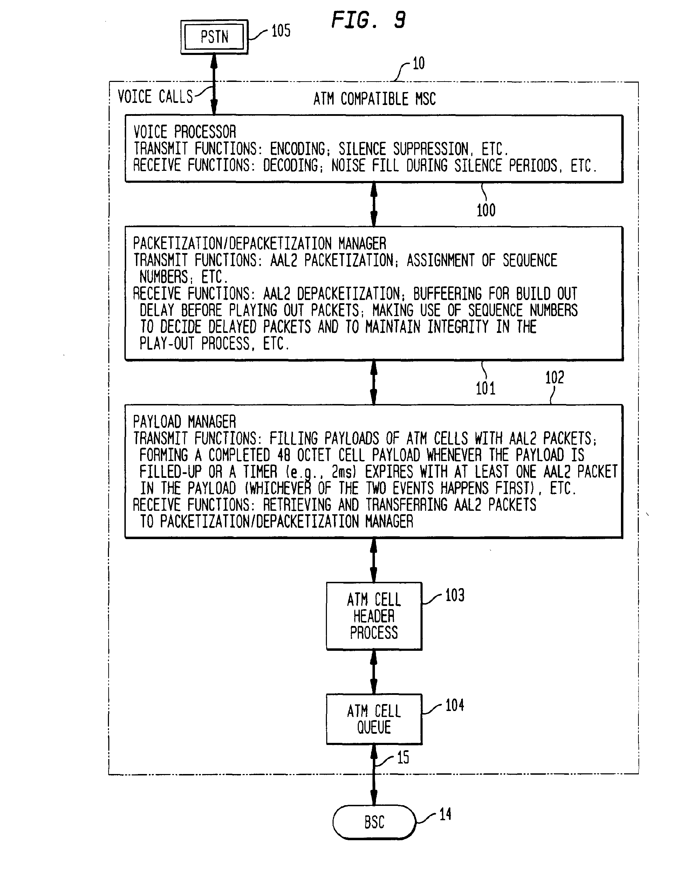

FIG. 9 illustrates the switching center 10 of FIG. 1 in more detail. The switching center 10 preferably supports an AAL2 transport mechanism and multiplexing of ATM cells. For simplicity, only certain significant data packet aspects of the mobile switching center 10 are shown in FIG. 9. In practice, the mobile switching center 10 supports other functions, such as call management and signaling messaging.

The mobile switching center 10 includes a voice processor 100 that communications with a packetization/depacketization manager 101. In turn, a payload manager communications 102 with the packetization/depacketization manager 101. The payload manager 102 is coupled to an ATM cell header processor 103 and an ATM cell queue 104 for interfacing at least one base station controller 14. The voice processor 100 may be coupled to a public switched telephone network 105 or another communications network. The voice processor 100, packetization/depacketization manager 101, and payload manager 102 are first described for transmit functions for the forward link. In one embodiment, the packetization/depacketization manager 101 provides AAL2 service specific convergence sublayer processing and the payload manager provides AAL2 common part sublayer processing.

For purposes of illustrating the operation of the mobile switching center 10 in the forward link, assume that the public switched telephone network 105 carries a voice call that is communicating with a mobile station 18 in a soft hand-off.

The voice call data originating from the public switched telephone network is encoded and noise suppression is used. The voice processor 100 may compress a digital voice signal using a low-bit rate encoder such as ADPCM or low delay code excited linear prediction (LC-CELP). Further, the voice processor 100 may detect silences to eliminate or reduce the transmission of information with low or no informational content.

The voice call data is communicated to the packetization manager 101 which places the voice call data input AAL2 packetization. The packetization/depacketization manager 101 may assign sequence numbers or provide other enhancements for the data packets. The sequence numbers help identify whether a data packet is lost or misplaced during subsequent processing. The packetization/depacketization manager 101 may perform following transmit functions: Voice information is packetized into AAL2 packets; sequence numbers are assigned to AAL2 voice packets; the background noise level is modified via very short packets transmitted during silence periods.

The packetized data is provided from the packetization/depacketization manager 101 to the payload manager. The payload manager 102 fills payloads of ATM cells with AAL2 packets. The payload manager 102 forms a completed 48 octet cell payload whenever the payload is filled up or whenever a timer (e.g., set to 2ms) expires with at least one AAL2 packet in the payload, whichever of the two events happens first. An octet represents an eight bit segment of an ATM cell. The payload manager 102 forwards the completed cell payload to the ATM cell header processing to add the ATM cell header to the cell payload. The ATM cell with the header is then placed into a queue for transmission to the base station controller 14 as an ATM data packet. The timer of the payload manager 102 is reset at the arrival of an AAL2 packet if it overflows into and/or fills a new ATM cell payload. Thus, the transmission delay contributed by the payload manager 102 to AAL2 packet is at most equal to a timer duration of the timer.

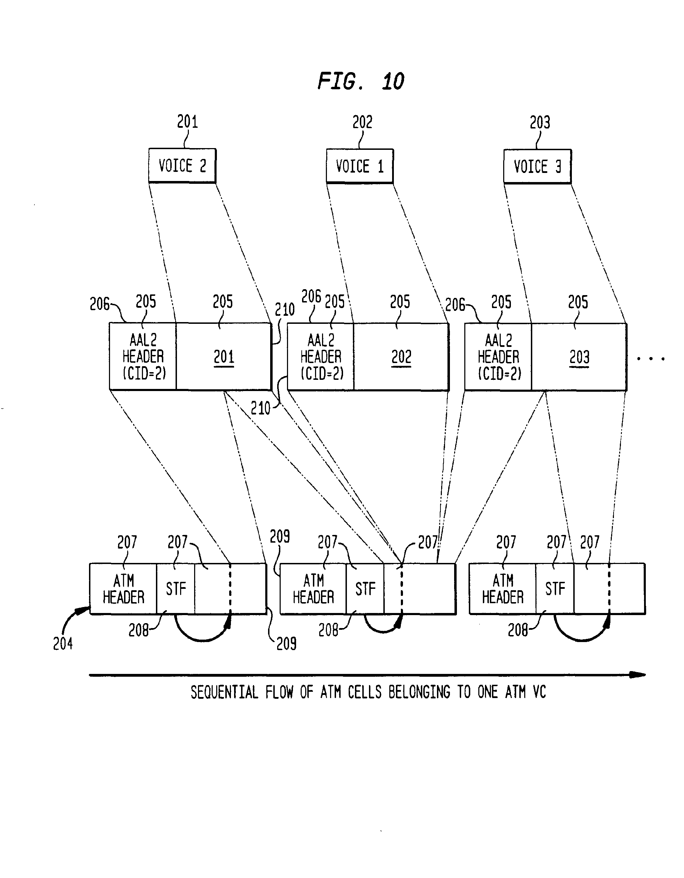

FIG. 10 illustrates a system employing asynchronous transfer mode (ATM), adaptation layer type 2 (AAL2), common part sublayer (CPS) together with a service specific convergence sublayer (SSCS) for carrying compressed voice over ATM. Assume the MSC 10 receives a voice signal from a public switched telephone network (PSTN) at a 64 Kbps or 56 Kbps (DSO) rate. The ATM-compatible MSC 10 may convert the voice signal into ATM packets using AAL2 for forward transmission to the base station controller 14 consistent with the data structure of FIG. 10.

Details of the AAL2 voice packetization and multiplexing are shown in FIG. 10. The voice payload units designated 201 through 203 represent information segments from different voice sources being multiplexed in one ATM voice channel 204. Although the AAL2 packets 205 represent voice information for illustrative purposes here, in other embodiments each AAL2 packet may contain a segment of a voice call, a segment of a data message, or other information (e.g., signaling data or control data). Each voice information segment is appended with an AAL2 header 206. The AAL2 header 206 may be placed in the middle of an ATM cell 207, for example. The channel ID (CID) within each AAL2 header 206 identified the voice call with which the AAL2 packet is associated.

The AAL2 packets 205 are preferably multiplexed back-to-back in the ATM cell payloads, except for one octet (e.g., first octet) or eight bits of each ATM cell 207 which is used for a start field 208 (STF). The start field 208 points to the beginning of a first AAL2 header 206 in an ATM cell 207.

AAL2 packets 205 may cross over ATM cell boundaries 209. An AAL2 packet 205 in a subsequent cell may be related to earlier data from a previous ATM cell. The AAL2 packet boundaries 210 need not match with the ATM cell boundaries. An AAL2 packet may being in the middle of payload of one ATM cell, and it may end somewhere in the payload of a subsequent ATM cell.

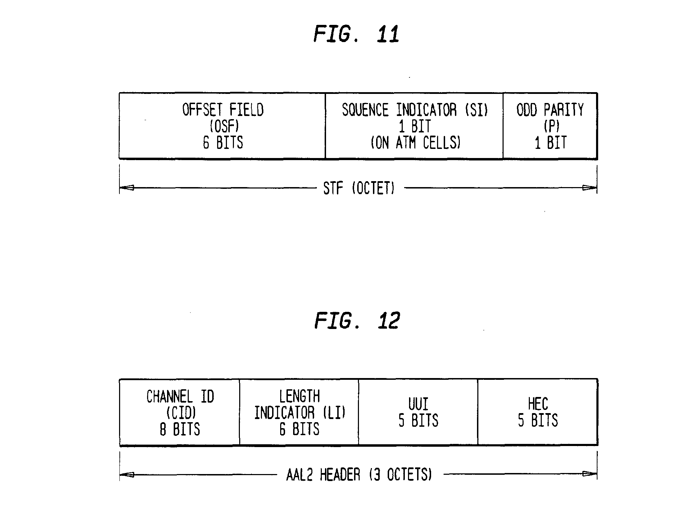

FIG. 11 illustrates an example of a start field of an ATM cell. As shown in FIG. 11, the STF octet contains a 6-bit Offset Field (OSF), one bit sequence indicator (for ATM cells of a given voice channel), and one bit for odd parity. The OSF in each cell points to the first AAL2 packet boundary in that cell. For example, the OSF value may range from a minimum value (e.g., 0) to a maximum value (e.g., 47). The OSF may be set to the minimum value if the AAL2 packet begins right next to the STF. The OSF may be set to the maximum value if there is no AAL2 packet boundary in the cell payload.

The details of the AAL2 header are shown in FIG. 12. The one octet channel ID (CID) identifies up to 248 voice connections. A six bit long length indicator (LI) provides AAL2 packet length in octets (Up to 64 octets). Five bits in the AAL2 header are designated for use as user-to-user indication (UUI). The UUI field may be used to communicate service-provider specific or proprietary messages (for each connection individually) regarding voice-coding type used and sequence numbers of AAL2 packets. Sequence numbers in AAL2 packet headers facilitate detection of delayed or lost packets in the play-out process. When a delayed or lost packet is detected in the play-out process, a fill packet is typically played out in its place. An example of a fill packet is repetition of the packet played out in the preceding packet interval.

The reason for using AAL2 in conjunction with ATM to practice the invention is as follows. ATM is geared for efficient transmission and packet stuffing at 64 KBPS voice coding rates. However, many wireless applications work at lower coding rates on the order of 8 Kbps to 14 Kbps. If a 20ms packetization interval is selected, which is generally the maximum packetization delay allowable for voice calls, the payload of an ATM cell is not filled by data provided at 14 Kbps. Accordingly, the AAL2 data protocol provides another layer of packets of smaller size than the ATM cells, such that the AAL2 packets are of variable size. Unlike ATM cells, AAL2 packets are placed back-to-back within a fixed length payload of ATM cells and can cross the boundaries of ATM cells. Each AAL2 packet has another header, besides the header provided by the ATM cell. An ATM header is compatible with placing AAL2 packets inside the ATM cell. The AAL2 facilitates the elimination of idle or empty portions of the ATM packet. Each AAL2 packet identifies the call source or destination.

The base station controller 14, the base station 16, and the mobile switching center 10 preferably include suitable receivers for reading data packets, such as ATM packets and AAL2 packets. Such a receiver receives an ATM packet containing AAL2 and decodes the ATM packet as follows. First, the receiver processes the ATM header and removes it to obtain 48 octets. The first octet is read because it contains the STF. The STF is used to find the starting position of the first AAL2 packet in the ATM packet. Starting from the first AAL2 packet the 47 octet payload is laid out sequentially in a receiver buffer memory as a byte stream. Each AAL2 packet is read to determine which voice call or data message to which the AAL2 packet should be applied. Further, the sequence of each AAL2 packet for a particular voice call or data message and the length of the voice call or data message are read. The byte stream is demultiplexed into different voice calls, data messages, or both which are forwarded to different decoders to reproduce the call. The above procedure is fairly robust because if an AAL2 data packet gets lost or corrupt, the receiver may identify the sequence number of the AAL2 data packet and complete a data recovery procedure.

Although the method and system for enhancing inter-site traffic capacity is primarily described with reference to ATM packet formats (in combination with use of AAL2 adaptation layer protocol), the invention is generally applicable to packet formats of any kind, such as, internet protocol (IP) and frame relay (FR). In an alternate embodiments, the method and system may be practiced with internet protocol data packets, AAL5 data packets, variants thereof, Generic RTP Multiplexing (GeRM) protocol, or other data packet structures.

AAL5 is an adaptation layer protocol which is most suitable for adapting voice content to ATM packets. Generic RTP Multiplexing (GeRM) protocol may be used for packetization of voice information if IP is the transport protocol for the communications line 15 or more generally for the backhaul network of the wireless communications system. GeRM is a protocol that emulates AAL2. GeRM allows for multiplexing of voice packets or mini-packets from multiple voice sources within an IP packet. Thus, GeRM helps reduce packet overhead associated with voice over IP. IP header compression may be used to further reduce overhead for voice over IP and falls within the scope of the invention.

The method and system is applicable to efficient handling of soft hand-offs for data applications and video applications as well as voice applications. If the transport protocol were IP, there is no need for an adaptation layer for data, and the efficient handling of soft-handoff for data applications will be performed at the IP layer itself.

The method and system for enhancing inter-site traffic capacity between the MSC and BSC or between the MSC and BTS, is well-suited for application to CDMA wireless systems. In a current state-of-the art CDMA wireless system, the MSC maintains separate dedicated connections for duplicative signals between the MSC and the BSC. In accordance with the invention, a single virtual connection between the BSC and the MSC is sufficient to support the forward traffic for at least one soft hand-off such that the forward traffic load may be reduced.

In a conventional soft hand-off of prior art wireless networks, the number of duplicative signals depends upon the number of legs or the number of pseudo-random noise code offsets in the active set of a soft hand-off. For example, approximately 35 percent of the capacity between the MSC and the BSC may represent traffic overhead carrying duplicative signals of various soft hand-offs in the prior art wireless network. In contrast, the invention disclosed herein can facilitate an estimated 40 percent or better reduction in requisite traffic capacity between the BSC and the MSC, assuming one or more three legged soft hand-offs and the aforementioned thirty-five percent overhead.

The specification describes various illustrative embodiments of the system and method of the invention. The scope of the claims is intended to cover various modifications and equivalent arrangements of the illustrative embodiments disclosed in the specification. Therefore, the following claims should be accorded the reasonably broadest interpretation to cover modifications, equivalent structures, and features which are consistent with the spirit and the scope of the invention disclosed herein.

## Claims

1. A method for a soft hand-off comprises:
receiving an original data packet for a forward path transmission to a mobile station;
copying the original data packet to generate distributional data packets when the mobile station is in a soft hand-off mode; and
sending the distributional data packets to corresponding base stations participating in the soft hand-off.

2. The method according to claim 1 further comprising the step of:
establishing a multicasting database to define routing of the distributional data packets to the base stations participating in the soft hand-off.

3. The method according to claim 1 further comprising the step of:
establishing a multicasting database including virtual path identifiers and channel identifiers, the virtual path identifiers identifying routing of the original data packet and the distributional data packets between a mobile switching center and at least one of the base stations, the channel identifiers indicating destination channel elements of the base stations participating in the soft hand-off to route the distributional data packets.

4. The method according to claim 1 further comprising the step of:
establishing a translation database for the base stations participating in the soft hand-off where a base station controller can translate a common soft hand-off channel identifier into a specific channel identifier indicative of an appropriate channel element in a particular base station for the soft hand-off.

5. The method according to claim 1 wherein further comprising the step of:
establishing a multicasting database including incoming combinations of virtual path identifiers and virtual channel identifiers and outgoing combinations of virtual path identifiers and virtual channel identifiers, the incoming combinations defining communications between a mobile switching center and a base station controller, the outgoing combinations defining communications between the base station controller and the base stations of the soft hand-off.

6. The method according to claim 1 further comprising the step of:
establishing a multicasting database for defining a first link between a mobile switching center and a base station controller and for defining at least one second link between a base station controller and the base stations such that the first link and at least one second link have independent virtual channel connections.

7. The method according to claim 1 further comprising the step of:
establishing a multicasting database for defining an incoming combination and an outgoing combination of channel identifiers and virtual path identifiers for the soft hand-off, wherein the channel identifiers are identical in the incoming and outgoing combination.

8. The method according to claim 1 further comprising the step of:
establishing a multicasting database for defining an incoming combination and an outgoing combination of one or more channel identifiers and virtual path identifiers for the soft hand-off, wherein the channel identifiers are identical in the incoming combination and the outgoing combination and wherein the virtual path identifiers are identical for the incoming and outgoing combinations.

9. The method according to claim 1 further comprising the step of:
establishing a multicasting database for defining an incoming combination and an outgoing combination of one or more channel identifiers and virtual path identifiers for the soft hand-off, wherein the channel identifiers are different in the incoming combination and the outgoing combination and wherein the virtual path identifiers are identical for the incoming and outgoing combinations.

10. A system for a soft hand-off comprises:
a data packet receiver for receiving an original data packet for a forward link transmission to a mobile station;
a data packet copier for copying the original data packet to generate distributional data packets when the mobile station is in a soft hand-off mode; and
a distributor for sending the distributional data packets to corresponding base stations participating in the soft hand-off.

11. The system according to claim 10 wherein the data packet receiver and distributor comprise a packet switching unit.

12. The system according to claim 10 comprising a multicasting server including a copier and a storage device for storing a multicasting database.

13. The system according to claim 10 further comprising a multicasting server including a storage device for storing a multicasting database, the multicasting database defining routing of the distributional data packets to the base stations participating in the soft hand-off.

14. The system according to claim 10 further comprising a multicasting database defining routing of the distributional data packets to the base stations participating in the soft hand-off.

15. The system according to claim 10 further comprising a multicasting database including virtual path identifiers and virtual channel identifiers; the virtual path identifiers identifying routing of the original data packet and the distributional data packets between a mobile switching center and at least one of the base stations, the virtual channel identifiers indicating destination channel elements of the base stations participating in the soft hand-off to appropriately route the distributional data packets.

16. The system according to claim 10 further comprising base stations for communicating with the distributor, the base stations storing corresponding translation tables such that each of the base stations can translate a common soft hand-off digital logical channel identifier into a specific digital logical channel identifier indicative of an appropriate channel element in a particular base station for the soft hand-off.

17. The system according to claim 10 further comprising a multicasting database including an incoming combination of one or more virtual path identifiers and virtual channel identifiers and an outgoing combination of one or more virtual path identifiers and virtual channel identifiers, the incoming combination defining communications between a mobile switching center and the data packet receiver, the outgoing combination defining communications between the distributor and base stations of a soft hand-off.

18. The system according to claim 10 further comprising a multicasting database for defining a first link between a mobile switching center and the data packet receiver and for defining a second link between the distributor and base stations with independent virtual channel connections.

19. The system according to claim 10 further comprising a multicasting database for defining an incoming combination and an outgoing combination of one or more channel identifiers and virtual path identifiers, wherein the channel identifiers are identical in the incoming combination and the outgoing combination.

20. The system according to claim 10 further comprising a multicasting database for defining an incoming combination and an outgoing combination of one or more channel identifiers and virtual path identifiers, wherein the channel identifiers are identical in the incoming combination and the outgoing combination and wherein the virtual path identifiers are identical for the incoming combination and the outgoing combination.

21. A method for minimizing transmission capacity between a mobile switching center and a base station controller in a wireless network, the method comprising:
receiving a single packet at a base station controller from a mobile switching center, the single data packet being representative of multiple packets to be transmitted on multiple legs of a soft hand-off;
copying said single packet to form the multiple packets;
transmitting the multiple packets on the multiple legs of the soft hand-off from the base station controller to base stations participating in the soft hand-off.

22. The method according to claim 21 comprising the step of carrying voice information over the single packet and the multiple packets comprising adaptation layer type two packets placed within asynchronous transfer mode cells.

23. The method according to claim 21 comprising the step of carrying data information over the single packet and the multiple packets comprising adaptation layer type five packets placed within asynchronous transfer mode cells.

24. The method according to claim 21 comprising the step of carrying data information over the single packet and the multiple packets comprising internet protocol packets.
